# EUROPÄISCHE PATENTSCHRIFT

(11) **EP 1 659 235 B1**
(45) Veröffentlichungstag und Bekanntmachung des Hinweises auf die Patenterteilung: **03.12.2008**
(21) Anmeldenummer: 05028455.3
(22) Anmeldetag: 27.02.2002
(51) Int. Cl.: E04G 21/04, B66C 23/78, G01L 1/16, E02F 9/08

(54) **Mobiles Arbeitsgerät mit Standsicherheitsüberwachung**
Mobile working machine provided with stability monitoring
Moyen mobile de travail avec dispositif de surveillance de la stabilité

(30) Priorität: 02.03.2001 DE 10110176
(43) Veröffentlichungstag der Anmeldung: 24.05.2006
(62) Teilanmeldung aus: 02735106.3
(73) Patentinhaber: Putzmeister Concrete Pumps GmbH, 72631 Aichtal (DE)
(72) Erfinder: Gelies, Dr., Stephan, 39124 Magdeburg (DE); Alwes, Dieter, 72631 Aichtal (DE); Petzold, Wolf-Michael, 73773 Aichwald (DE)
(74) Vertreter: Wolf, Eckhard

(56) Entgegenhaltungen:
- EP-A- 0 531 828
- DE-A- 2 230 546
- DE-A- 2 436 849
- DE-A- 19 716 521
- DE-A- 19 857 298
- US-A- 3 713 129
- US-A- 4 546 658
- US-A- 4 833 615
- US-A- 5 557 526
- PATENT ABSTRACTS OF JAPAN Bd. 008, Nr. 224 (M-331), 13. Oktober 1984 (1984-10-13) & JP 59 106351 A (MITSUBISHI DENKI KK), 20. Juni 1984 (1984-06-20)
- PATENT ABSTRACTS OF JAPAN Bd. 2000, Nr. 21, 3. August 2001 (2001-08-03) & JP 2001 106480 A (IKENO TSUKEN KK), 17. April 2001 (2001-04-17)

## Beschreibung

Die Erfindung betrifft ein mobiles Arbeitsgerät, insbesondere eine Autobetonpumpe mit einem Fahrgestell, mit zwei vorderen und zwei rückwärtigen, von einer Fahrstellung in mindestens eine Abstützstellung ausfahrbaren und mit je einem vorzugsweise teleskopierbaren Stützfuß auf einer Unterlage abstützbaren Stützauslegern, mit einem von einer Fahrstellung in über das Fahrgestell auskragende Arbeitsstellungen ausfahrbaren, um eine fahrgestellfeste Hochachse drehbaren, vorzugsweise als Betonverteilermast ausgebildeten Arbeitsausleger, mit im Bereich der Stützfüße angeordneten Messeinrichtungen zur Bestimmung der jeweiligen Stützlast und mit einer mit den Ausgangssignalen der Messeinrichtungen beaufschlagbaren Einrichtung zur Überwachung der Standsicherheit. JP 59 106 351 A beschreibt ein solches Arbeitsgerät.

Mobile Arbeitsgeräte dieser Art sind mit ausfahrbaren Stützauslegern versehen, die am Einsatzort die Standfestigkeit des Arbeitsgeräts verbessern sollen. Die Stützausleger haben dabei einerseits die Aufgabe, die Fahrzeugfederung zu eliminieren und die Räder zu entlasten. Zum anderen sollen die Stützausleger die Kippgefahr mindern, die sich ergibt, wenn über den Arbeitsausleger hohe Kippmomente entstehen. Die Stützfüße der Stützausleger bilden die Ecken eines Vierecks, dessen Seitenlinien eine Fläche umschreiben, innerhalb welcher der Gesamtschwerpunkt des Arbeitsgeräts liegen muss, um die Standsicherheit zu gewährleisten. Da der auskragende Arbeitsausleger drehbar ist, beschreibt der Gesamtschwerpunkt bei einer Drehung einen Vollkreis, der im Arbeitsbereich des Arbeitsauslegers innerhalb der Viereckfläche liegen muss. Da die Platzverhältnisse auf den Baustellen beengt sind, wird oft auf eine Vollabstützung verzichtet. Dadurch wird der Schwenkbereich des Arbeitsauslegers begrenzt. Um die Kippsicherung zu gewährleisten, wurde bereits eine Überwachungseinrichtung vorgeschlagen. Dort werden die in den vier hydraulisch betätigten Teleskopen der Stützbeine herrschenden Drücke überwacht. Lässt der Druck in zwei Stützbeinzylindern nach, so werden die Mastbewegung und die Betonpumpe abgeschaltet. Diese Technik lässt sich auch für den Fall nutzen, dass eine Maschine aus Platzgründen nicht voll abgestützt ist (Zeitschrift BETON 6/96, Seite 362, 364). Untersuchungen haben gezeigt, dass Druckmessungen in den Teleskopzylindern der Stützbeine für eine zuverlässige Stützbeinüberwachung nicht ausreicht. Dies gilt vor allem dann, wenn einer der Teleskopzylinder auf Anschlag gefahren ist. Auch dynamische Abstützeffekte lassen sich mit diesem Überwachungssystem nicht erfassen.

Ausgehend hiervon liegt der Erfindung die Aufgabe zugrunde, die Standsicherheitsüberwachung mobiler Arbeitsgeräte hinsichtlich ihrer Genauigkeit und Einsetzbarkeit in komplizierten Abstützsituationen zu verbessern.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt vor-allem der Gedanke zugrunde, dass in jedem Stützfuß zwei gleichartige Kraftsensoren angeordnet sind, die in voneinander unabhängigen Messkreisen zur Abgabe eines stützlastabhängigen Messsignals angeordnet sind und dass die Auswerteelektronik eine Softwareroutine zum paarweisen Vergleich der aus den stützfußbezogenen Messsignalen abgeleiteten Messwerte hinsichtlich ihrer Übereinstimmung oder Nichtübereinstimmung enthält. Nur wenn die zu den einzelnen Stützfüßen gehörenden Messwerte paarweise innerhalb eines vorgegebenen Toleranzbereichs gleich sind, ist eine Weiterverarbeitung innerhalb der Auswerteelektronik möglich. Die sich daraus ergebende Redundanz des Meßsystems ist notwendig, um eine zuverlässige Überwachung der Geräteabstützung zu gewährleisten.

Eine bevorzugte Ausgestaltung der Erfindung sieht vor, dass die Auswerteelektronik eine Softwareroutine zur Ermittlung des zweitniedrigsten stützfußbezogenen Stützlast-Messwerts eines jeden Arbeitszyklus und zu dessen Vergleich mit einem stabilitätsbestimmenden Schwellenwert umfasst. Dabei wird der Erkenntnis Rechnung getragen, dass sich unter der Berücksichtigung der statischen Unbestimmtheit der Vierpunktabstützung regelmäßig eine Dreipunktabstützung einstellen wird, die bei einer Bewegung des Arbeitsauslegers zu wechselnden Abstützkonfigurationen führt. Einer der Stützbeine kann dabei sogar vom Untergrund abheben, ohne die Kippstabilität zu gefährden. Maßgeblich für die Standsicherheit ist gemäß der Erfindung stets der zweitniedrigste stützfußbezogene Stützlast-Messwert. Unterschreitet dieser eine Minimalkraft mit abnehmender Tendenz, so ist eine Notabschaltung der Auslegerbewegung und des Pumpbetriebs angezeigt. Der hierfür maßgebliche Sollwertgeber wird beispielsweise auf eine Minimalkraft von 0,5 bis 5 % der stützbeinbezogenen Maximalkraft eingestellt. Die Erfindung erlaubt es außerdem, vor dem Erreichen des genannten Gefahrenbereichs eine Vorwarnung zu geben. Dementsprechend wird ein weiterer Sollwertgeber zur Vorgabe einer Vorwarnkraft vorgesehen, der beispielsweise bei 5 bis 10 % der stützbeinbezogenen Maximallast liegt und der dem Pumpenfahrer beispielsweise über ein akustisches und/oder optisches Signal anzeigt, dass eine erhöhte Aufmerksamkeit erforderlich ist. Grundsätzlich ist es möglich, die Überwachungseinrichtung auch unmittelbar zur Notabschaltung des Arbeitsauslegers und/oder der Betonpumpe zu verwenden.

Die Kraftsensoren weisen zweckmäßig einen Dehnmessstreifen oder ein piezoelektrisches Element auf. Die elektrischen Messkreise enthalten vorteilhafterweise eine Brückenschaltung, in deren einem Zweig der zugehörige Kraftsensor angeordnet ist und deren Ausgang an einen Operationsverstärker angeschlossen ist.

Da es bei der Stabilitätskontrolle vor allem auf einen Vergleich der gemessenen stützlastbezogenen Messwerte mit vorgegebenen Schwellenwerten ankommt, wird weiterhin vorgeschlagen, dass die elektrischen Messkreise in einem Messbereich, der die Schwellenwerte umfasst, auf eine erhöhte Messgenauigkeit eingestellt sind. Da die stabilitätsbestimmenden Schwellenwerte eher am unteren Ende der Stützlastskala zu finden sind, ist es von Vorteil, wenn die elektrischen Messkreise eine von hohen zu niedrigen stützfußbezogenen Stützlasten hin zunehmende Messgenauigkeit aufweisen. Als besonders vorteilhaft hat es sich erwiesen, wenn die elektrischen Messkreise in einem Messbereich unterhalb 30 %, vorzugsweise unterhalb von 15 % der stützfußbezogenen Maximallast auf eine erhöhte Messgenauigkeit eingestellt sind.

Um einen Grundbruch zu vermeiden, kann es bei kritischen Bodenverhältnissen auch notwendig sein, einen oberen Schwellenwert einzuführen. Dieser Schwellenwert wird zweckmäßig so gewählt, dass bei gegebener Abstützfläche ein Grundbruch noch nicht eintritt.

Eine weitere bevorzugte Ausgestaltung der Erfindung sieht vor, dass der Kraftsensor in einem vorzugsweise nachträglich am Stützfuß befestigbaren Fußelement angeordnet ist. In diesem Fall kann auch der Messkreis und gegebenenfalls ein Teil der Auswerteelektronik im Fußelement integriert sein. Der Messkreis ist dabei bevorzugt über eine galvanische oder drahtlose Signalübertragungsstrecke mit der Auswerteelektronik gekoppelt.

Im Folgenden wird die Erfindung anhand der in der Zeichnung dargestellten Ausführungsbeispiele näher erläutert. Es zeigen
- Fig. 1: eine Ansicht einer am Straßenrand abgestellten Autobetonpumpe mit auf der Straßenseite schmal abgestützten Stützauslegern;

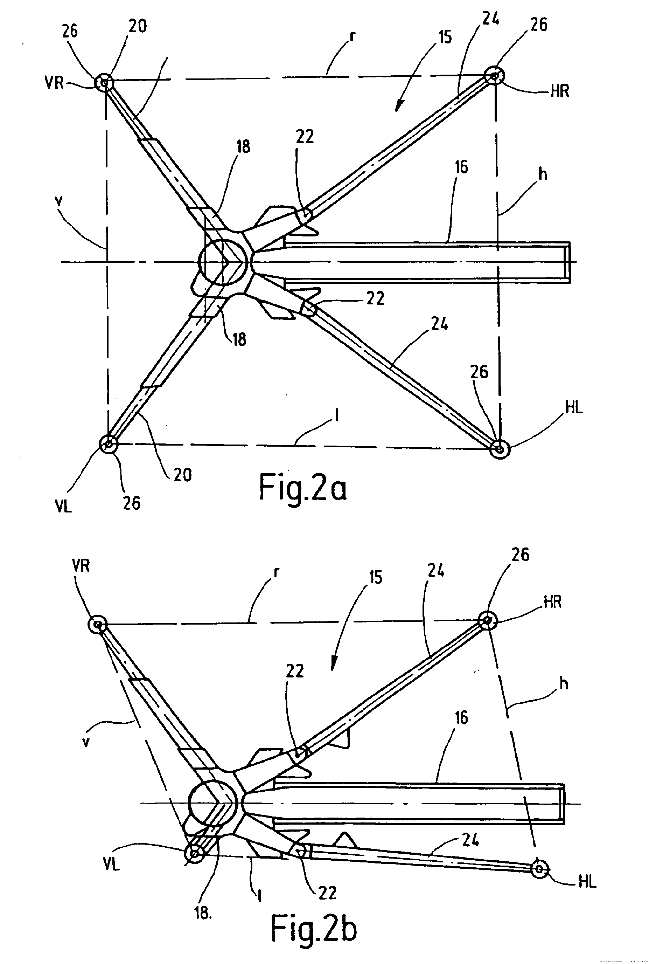

- Fig. 2a: und b eine Draufsicht auf die Stützkonstruktion der Autobetonpumpe nach Fig. 1 im Zustand der Vollabstützung und der einseitigen Schmalabstützung;
- Fig. 3a: eine Seitenansicht eines Stützfußes eines Stützauslegers mit angesetztem Stützlastsensor in geschnittener Darstellung;
- Fig. 3b: einen Schnitt durch einen Stützfuß eines Stützauslegers mit integriertem Stützlastsensor;
- Fig. 4a: ein Schema eines Stützfußes mit redundanten Stützlastsensoren;
- Fig. 4b: ein Schaltschema der redundanten Stützlastsensoren mit Auswerteelektronik.

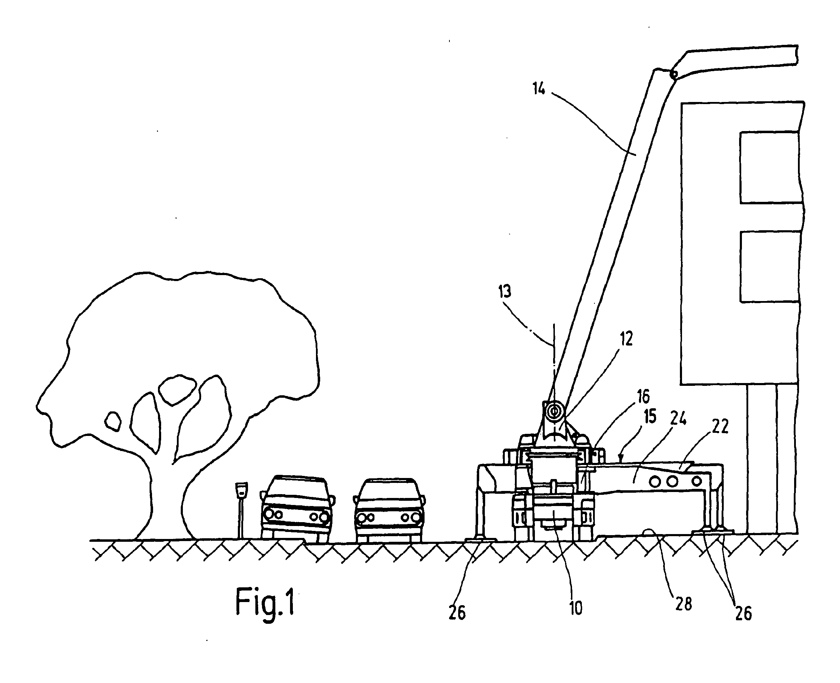

Die in Fig. 1 dargestellte fahrbare Betonpumpe besteht im wesentlichen aus einem mehrachsigen Fahrgestell 10, einem an einem vorderachsnahen Mastbock 12 um eine fahrgestellfeste Hochachse 13 drehbar gelagerten Betonverteilermast 14 und einer Stützkonstruktion 15, die einen fahrgestellfesten Tragrahmen 16, zwei am Tragrahmen 16 in je einem als Ausschubkasten ausgebildeten Teleskopsegment 18 verschiebbare vorderer Stützausleger 20 und zwei um eine lotrechte Achse 22 verschwenkbare hintere Stützausleger 24 aufweist. Die Stützausleger 20,24 sind mit je einem nach unten ausfahrbaren Stützfuß 26 auf dem Untergrund 28 abstützbar. Die vorderen und rückwärtigen Stützausleger 20,28 sind mit hydraulischen Mitteln von einer fahrgestellnahen Fahrstellung in eine Abstützstellung ausfahrbar. Bei dem in Fig. 1 gezeigten Beispiel wurde auf der Straßenseite eine Schmalabstützung gewählt. Die Schmalabstützung, mit der den Platzproblemen auf Baustellen Rechnung getragen werden kann, führt zwangsläufig zu einer Einschränkung im Drehwinkel des Arbeitsauslegers 14.

Die vier auf dem Boden aufstehenden Stützfüße VL (vorne links), VR (vorne rechts), HL (hinten links) und HR (hinten rechts) spannen ein Viereck auf, dessen Seiten l, r, v und h (links, rechts, vorne und hinten) jeweils eine Kippkante bilden. Zur Gewährleistung der Standsicherheit dürfen die Viereckseiten beim Verfahren des Arbeitsauslegers vom Gesamtschwerpunkt des Systems nicht nach außen überschritten werden. Die Erfindung macht von der Erkenntnis Gebrauch, dass die Lage des Gesamtschwerpunkts innerhalb des Kippvierecks durch Stützlastsensoren an den die Ecken des Kippvierecks bildenden Stützfüßen 26 überwacht werden kann. Dementsprechend ist in jedem Stützfuß 26 eine Sensoreinheit 30 angeordnet, die zwei Kraftsensoren 32,34 mit zugehörigem elektrischem Messkreis 36,38 und Operationsverstärker 40,42 umfasst. Jeder Messkreis 36,38 gibt über seinen Verstärker 40,42 ein in vorgegebenen Zeitzyklen abtastbares stützlastabhängiges Messsignal ab, das in einer zentralen Auswerteelektronik 54 verarbeitet wird.

Nur wenn die über die beiden Messkreise 36,38 eines Stützfußes 26 ermittelten Messwerte innerhalb einer vorgegebenen Fehlertoleranz übereinstimmen, werden sie einer weitergehenden Auswertung zugeführt. Dementsprechend enthält die Auswerteelektronik 54 eine Softwareroutine 60 zum paarweisen Vergleich der aus den stützfußbezogenen Messsignalen abgeleiteten Messwerte hinsichtlich ihrer Übereinstimmung. Wenn diese Übereinstimmung bei mehreren Abtastzyklen nicht gegeben ist, deutet dies auf einen Mess- oder Elektronikfehler hin, der zu einer Notabschaltung des Systems und damit zu einer Außerbetriebsetzung der Autobetonpumpe führt.

Eine weitere Besonderheit der Auswerteelektronik 54 besteht darin, dass sie eine Softwareroutine 62 zur Ermittlung des zweitniedrigsten stützfußbezogenen Stützlast-Messwerts eines jeden Abtastzyklus und zu dessen Vergleich mit einem stabilitätsbestimmenden Schwellenwert umfasst. Damit wird der Erkenntnis Rechnung getragen, dass eine Stützkonstruktion 15 mit vier Stützfüßen 26 statisch überbestimmt ist, so dass in jeder Konstellation des Arbeitsauslegers 14 nur drei der vier stützfußbezogenen Messwerte für die Standsicherheit von Bedeutung sind. Die Standsicherheit ist grundsätzlich gegeben, wenn an drei Stützfüßen 26 noch eine Stützlast angreift, die eine vorgegebene Minimalkraft übersteigt. Nach dem Ausfahren der Stützausleger 20,24 ist im Normalfall in allen Stützfüßen 26 die gemessene Stützlast größer als eine vorgegebene Vorwarnkraft. Wird der Arbeitsausleger 14 bewegt, kann ein Stützfuß 26 ohne Stabilitätsrisiko sogar komplett vom Boden abheben. Eine Warnung (akustisch/optisch) wird erst ausgegeben, wenn die Stützlast an einem weiteren Stützfuß 26 unter die Vorwarnkraft absinkt. Wird der betreffende Stützfuß noch weiter entlastet und sinkt seine Stützlast unter die vorgegebene Minimalkraft, wird die Bewegung des Arbeitsauslegers 14 und der Betrieb der Betonpumpe durch Unterbrechung der Druckölzufuhr über ein Not-Aus-Ventil 56 abgeschaltet. In diesem Zustand kann der Bediener durch eine Notbetätigung, begleitet durch ein akustisches Hupsignal, den Arbeitsausleger 14 unter eigener Verantwortung aus dem Gefahrenbereich bergen. Auch eine Rundumleuchte 58 kann dem Bediener den Zustand der Vorwarnung anzeigen. Beim handbetätigten Bergevorgangs zeigt diese Rundumleuchte 58 durch Erlöschen an, dass die Stützlast in drei Stützfüßen 26 die Minimalkraft wieder überschritten hat.

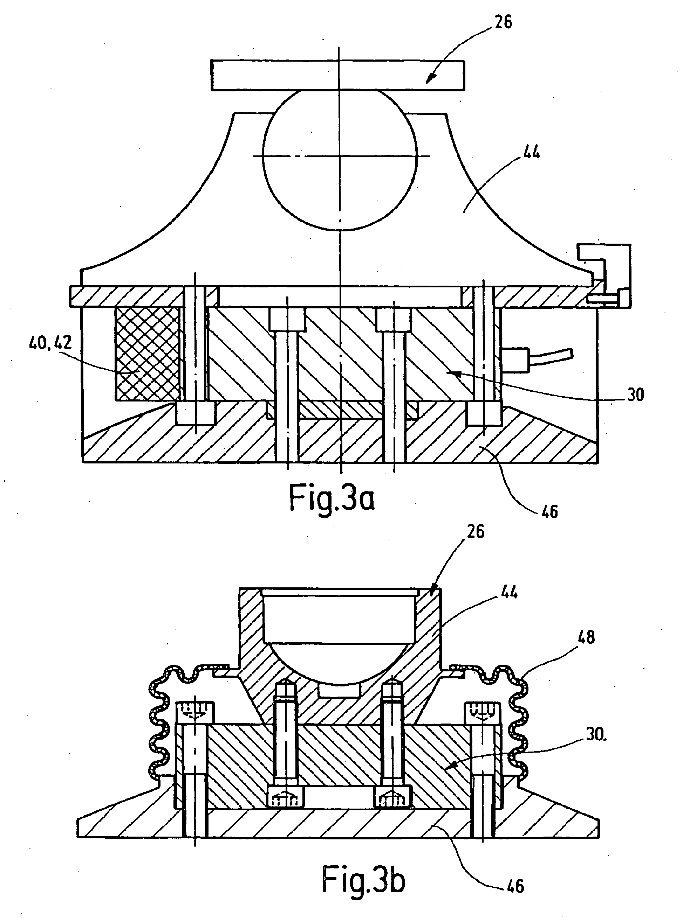

Wie aus Fig. 3a und b zu ersehen ist, ist die Sensoreinheit 30 zwischen einem Pendelfuß 44 des Stützfußes 26 und einem unmittelbar auf dem Boden aufstellbaren Fußteller 46 eingespannt. Dabei ist im Falle der Fig. 3a der Fußteller 46 mit Sensoreinheit 30 nachträglich an einem bereits vorhandenen Pendelfuß 44 des Stützfußes 26 befestigt, während im Falle der Fig. 3b eine den Pendelfuß 44 mit umfassende Konstruktion vorgesehen ist, die den ursprünglichen Pendelfuß ersetzt. Die Konstruktion nach Fig. 3b baut dementsprechend niedriger als die Konstruktion nach Fig. 3a und ist zudem durch eine Abdeckung 48 gegen Schmutzzutritt und Beschädigungen von außen geschützt.

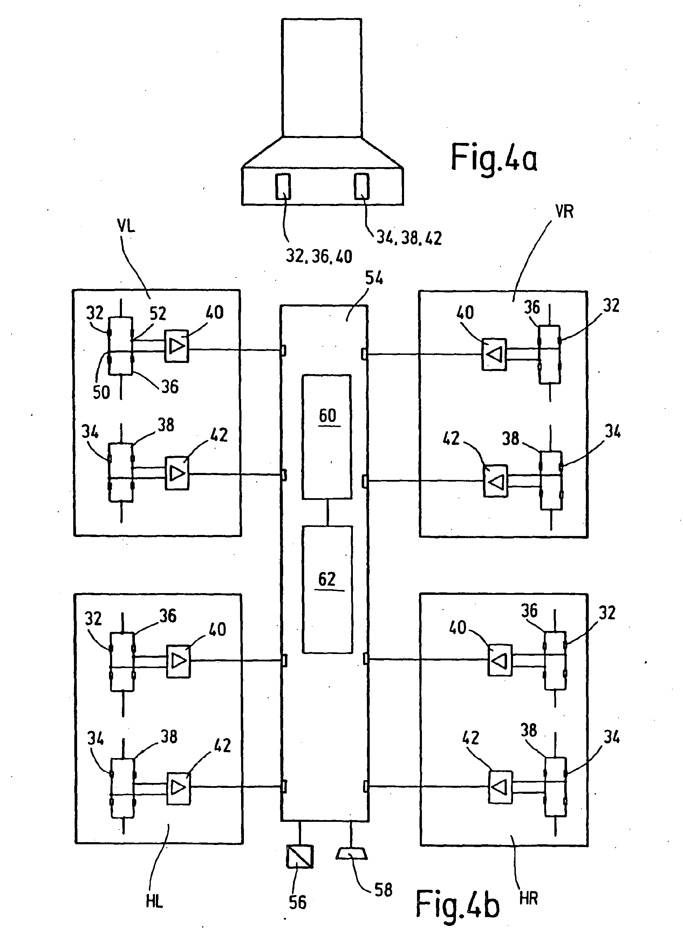

Wie aus Fig. 4b zu ersehen ist, sind die Messkreise 36,38 als Wheatstonebrücken ausgebildet, an deren einem Zweig der als Dehnmessstreifen ausgebildete Kraftsensor 32 bzw. 34 angeordnet ist. Die Diagonalabgriffe 50,52 der Messkreise 36,38 sind an die Eingänge des zugehörigen Operationsverstärkers 40,42 angelegt, an dessen Ausgang das stützlast-proportionale elektrische Messsignal abgreifbar ist. Der Messbereich von 4 bis 20 mA am Ausgang der Verstärker 40,42 wird genutzt, um eine möglichst hohe Genauigkeit bei niedrigen Kraftwerten zu erhalten. Dementsprechend wird die Messgenauigkeit durch entsprechende Einstellung des Verstärkers in einem Bereich erhöht, der etwa 20 % der an einem Stützfuß auftretenden Maximallast entspricht. Bei größeren Stützlasten wird stets der Maximalwert (z.B. 20 mA) am Verstärkerausgang abgegriffen.

Grundsätzlich ist es möglich, den Messbereich der Messkreise umzuschalten, so dass auch die Maximallast messtechnisch erfasst werden kann.

Zusammenfassend ist folgendes festzuhalten: Die Erfindung bezieht sich auf ein mobiles Arbeitsgerät, insbesondere eine Autobetonpumpe mit einer Einrichtung zur Überwachung der Standsicherheit im Betrieb. Das Arbeitsgerät weist ein Fahrgestell 10 auf, das eine Stützkonstruktion mit zwei vorderen und zwei rückwärtigen Stützauslegern 20 enthält. Die Stützausleger sind von einer Fahrstellung in mindestens eine Abstützstellung ausfahrbar und mit je einem teleskopierbaren Stützfuß 26 auf einer Unterlage 28 abstützbar. Das Arbeitsgerät weist ferner einen von einer Fahrstellung in über das Fahrgestell auskragende Arbeitsstellungen ausfahrbaren, um eine fahrgestellfeste Hochachse drehbaren, vorzugsweise als Betonverteilermast ausgebildeten Arbeitsausleger 14 auf. Im Bereich der Stützfüße sind Messeinrichtungen zur Bestimmung der jeweiligen Stützlast angeordnet, deren Ausgangssignale einer Einrichtung zur Überwachung der Standsicherheit zugeleitet werden. Erfindungsgemäß sind in jedem Stützfuß zwei gleichartige Kraftsensoren 32,34 angeordnet, die in voneinander unabhängigen Messkreisen 36,38 zur Abgabe eines stützlastabhängigen Messsignals angeordnet sind. Die Überwachungseinrichtung umfasst eine Softwareroutine 60 zum paarweisen Vergleich der aus den stützfußbezogenen Messsignalen abgeleiteten Stützlast-Messwerte hinsichtlich ihrer Übereinstimmung.

## Patentansprüche

1. Mobiles Arbeitsgerät, insbesondere Autobetonpumpe, mit einem Fahrgestell (10), mit zwei vorderen und zwei rückwärtigen, von einer Fahrstellung in mindestens eine Abstützstellung ausfahrbaren und mit je einem Stützfuß (26) auf einer Unterlage (28) abstützbaren Stützauslegern (20), mit einem von einer Fahrstellung in über das Fahrgestell auskragende Arbeitsstellungen ausfahrbaren, um eine fahrgestellfeste Hochachse (13) drehbaren, vorzugsweise als Betonverteilermast ausgebildeten Arbeitsausleger (14), mit im Bereich der Stützfüße (26) angeordneten Messeinrichtungen (30) zur Bestimmung der jeweiligen Stützlast und mit einer mit den Ausgangssignalen der Messeinrichtungen beaufschlagbaren Einrichtung zur Überwachung der Standsicherheit, **dadurch gekennzeichnet, dass** in jedem Stützfuß (26) zwei gleichartige Kraftsensoren (32,34) angeordnet sind, die in voneinander unabhängigen Messkreisen (36,38) zur Abgabe eines stützlastabhängigen Messsignals angeordnet sind, und dass die Überwachungseinrichtung eine Softwareroutine (60) zum paarweisen Vergleich der aus den stützfußbezogenen Messsignalen abgeleiteten Stützlast-Messwerte hinsichtlich ihrer Übereinstimmung aufweist.

2. Arbeitsgerät nach Anspruch 1, **dadurch gekennzeichnet, dass** die Auswerteelektronik (54) eine Softwareroutine (62) zur Ermittlung des zweitniedrigsten stützfußbezogenen Stützlast-Messwerts eines jeden Abtastzyklus und zu dessen Vergleich mit einem stabilitätsbestimmenden Schwellenwert umfasst.

3. Arbeitsgerät nach 1 oder 2, **dadurch gekennzeichnet, dass** die Auswerteelektronik (54) eine Softwareroutine zur Ermittlung des höchsten stützfußbezogenen Stützlast-Messwerts eines jeden Abtastzyklus und zu dessen Vergleich mit einem stabilitätsbestimmenden Schwellenwert umfasst.

4. Arbeitsgerät nach einem der Ansprüche 1 bis 3, **dadurch gekennzeichnet, dass** die Auswerteelektronik (54) einen Schwellenwertgeber zur Vorgabe einer Minimalkraft aufweist.

5. Arbeitsgerät nach einem der Ansprüche 1 bis 4, **dadurch gekennzeichnet, dass** die Auswerteelektronik (54) einen Schwellenwertgeber zur Vorgabe einer Vorwarnkraft aufweist.

6. Arbeitsgerät nach einem der Ansprüche 1 bis 5, **dadurch gekennzeichnet, dass** die Auswerteelektronik (54) einen Schwellenwertgeber zur Vorgabe einer Maximalkraft aufweist.

7. Arbeitsgerät nach einem der Ansprüche 1 bis 6, **dadurch gekennzeichnet, dass** die Auswerteelektronik (54) mit einer Steuereinrichtung (56) zur Ansteuerung des Arbeitsauslegers (14) verbunden ist.

8. Arbeitsgerät nach einem der Ansprüche 1 bis 7, **dadurch gekennzeichnet, dass** die Auswerteelektronik (54) mit einer Steuereinrichtung (56) zur Ansteuerung einer Betonpumpe verbunden ist.

9. Arbeitsgerät nach einem der Ansprüche 1 bis 8, **dadurch gekennzeichnet, dass** die Auswerteelektronik (54) mit einem akustischen und/oder optischen Signalgeber (58) verbunden ist.

10. Arbeitsgerät nach einem der Ansprüche 1 bis 9, **dadurch gekennzeichnet, dass** die Kraftsensoren (32,34) einen Dehnmessstreifen aufweisen.

11. Arbeitsgerät nach einem der Ansprüche 1 bis 10, **dadurch gekennzeichnet, dass** die Kraftsensoren (32,34) als piezoelektrische Sensoren ausgebildet sind.

12. Arbeitsgerät nach einem der Ansprüche 1 bis 11, **dadurch gekennzeichnet, dass** die elektrischen Messkreise (36,38) eine Brückenschaltung enthalten, in deren einem Zweig der zugehörige Kraftsensor (32,34) angeordnet ist.

13. Arbeitsgerät nach Anspruch 12, **dadurch gekennzeichnet, dass** die Messkreise (36,38) einen eingangsseitig mit Diagonalabgriffen (50,52) der Brückenschaltung verbundenen Operationsverstärker (40,42) enthalten.

14. Arbeitsgerät nach einem der Ansprüche 1 bis 13, **dadurch gekennzeichnet, dass** die Kraftsensoren (32,34) in einem vorzugsweise nachträglich am Stützfuß (26) befestigbaren Fußelement (44,46) angeordnet sind.

15. Arbeitsgerät nach Anspruch 14, **dadurch gekennzeichnet, dass** der mindestens eine Messkreis (36,38) in dem zugehörigen Fußelement (44,46) integriert ist.

16. Arbeitsgerät nach Anspruch 15, **dadurch gekennzeichnet, dass** der mindestens eine Messkreis (36,38) über eine galvanische oder drahtlose Übertragungsstrecke mit der Auswerteelektronik (54) gekoppelt ist.

## Claims

1. Mobile work appliance, in particular automatic concrete pump, with an undercarriage (10), with two front and two rear supporting jibs (20) extendable from a travelling position into at least one supporting position and supportable on a base (28) in each case by means of a supporting foot (26), with a working jib (14) which is extendable from a travelling position into working positions projecting beyond the undercarriage and is rotatable about a vertical axis (13) fixed with respect to the undercarriage and which is preferably designed as a concrete distributor mast, with measuring devices (30), arranged in the region of the supporting feet (26), for determining the respective supporting load, and with a device, capable of being acted upon with the output signals from the measuring devices, for monitoring the stability, **characterized in that** in each supporting foot (26) are arranged two identical force sensors (32, 34) which are arranged in measurement circuits (36, 38), independent of one another, for emitting a measurement signal dependent on the supporting load, and **in that** the monitoring device has a software routine (60) for the paired comparison of the supporting-load measurement values, derived from the supporting-foot-related measurement signals, in terms of the identity between the said supporting-load measurement values.

2. Work appliance according to Claim 1, **characterized in that** the evaluation electronics (54) comprise a software routine (62) for determining the second-lowest supporting-foot-related supporting-load measurement value of each sensing cycle and for comparing it with a stability-determining threshold value.

3. Work appliance according to Claim 1 or 2, **characterized in that** the evaluation electronics (54) comprise a software routine for determining the highest supporting-foot-related supporting-load measurement value of each sensing cycle and for comparing it with a stability-determining threshold value.

4. Work appliance according to one of Claims 1 to 3, **characterized in that** the evaluation electronics (54) have a threshold-value generator for stipulating a minimum force.

5. Work appliance according to one of Claims 1 to 4, **characterized in that** the evaluation electronics (54) have a threshold-value generator for stipulating an early-warning force.

6. Work appliance according to one of Claims 1 to 5, **characterized in that** the evaluation electronics (54) have a threshold-value generator for stipulating a maximum force.

7. Work appliance according to one of Claims 1 to 6, **characterized in that** the evaluation electronics (54) are connected to a control device (56) for activating the working jib (14).

8. Work appliance according to one of Claims 1 to 7, **characterized in that** the evaluation electronics (54) are connected to a control device (56) for activating a concrete pump.

9. Work appliance according to one of Claims 1 to 8, **characterized in that** the evaluation electronics (54) are connected to an acoustic and/or optical signal generator (58).

10. Work appliance according to one of Claims 1 to 9, **characterized in that** the force sensors (32, 34) have a strain gauge.

11. Work appliance according to one of Claims 1 to 10, **characterized in that** the force sensors (32, 34) are designed as piezoelectric sensors.

12. Work appliance according to one of Claims 1 to 11, **characterized in that** the electrical measurement circuits (36, 38) contain a bridge connection, in one branch of which the associated force sensor (32, 34) is arranged.

13. Work appliance according to Claim 12, **characterized in that** the measurement circuits (36, 38) contain an operational amplifier (40, 42) connected on the input side to diagonal taps (50, 52) of the bridge connection.

14. Work appliance according to one of Claims 1 to 13, **characterized in that** the force sensors (32, 34) are arranged in a foot element (44, 46) preferably fastenable to the supporting foot (26) at a later stage.

15. Work appliance according to Claim 14, **characterized in that** the at least one measurement circuit (36, 38) is integrated in the associated foot element (44, 46).

16. Work appliance according to Claim 15, **characterized in that** the at least one measurement circuit (36, 38) is coupled to the evaluation electronics (54) via a galvanic or wireless transmission link.

## Revendications

1. Engin de travail mobile, notamment pompe à béton automatique, comprenant un châssis de roulement (10), deux bras de support (20) avant et deux bras de support arrière, pouvant être déployés d'une position de conduite dans une position de support et pouvant s'appuyer à chaque fois avec un pied de support respectif (26) sur une base (28), une flèche de travail (14) pouvant être déployée d'une position de conduite dans des positions de travail en porte à faux au-dessus du châssis de roulement, pouvant tourner autour d'un axe vertical (13) fixé au châssis de roulement, de préférence réalisée sous forme de mât de distribution de béton, des dispositifs de mesure (30) disposés dans la région des pieds de support (26) pour déterminer la charge de support respective et un dispositif pouvant être sollicité par les signaux de sortie des dispositifs de mesure pour surveiller la sécurité de stabilité, **caractérisé en ce que** dans chaque pied de support (26) sont disposés deux capteurs de force de même type (32, 34), qui sont disposés dans des circuits de mesure (36, 38) indépendants l'un de l'autre, pour fournir un signal de mesure dépendant de la charge de support, et **en ce que** le dispositif de surveillance présente un sous-programme logiciel (60) pour comparer, par paires, les valeurs de mesure de la charge de support dérivées des signaux de mesure se rapportant aux pieds de support, en vue de les faire correspondre.

2. Engin de travail selon la revendication 1, **caractérisé en ce que** l'électronique d'analyse (54) comprend un sous-programme logiciel (62) pour déterminer la valeur de mesure de la charge de support ayant l'avant-dernière valeur la plus basse se rapportant au pied de support dans un cycle de balayage et pour la comparer à une valeur seuil définissant la stabilité.

3. Engin de travail selon la revendication 1 ou 2, **caractérisé en ce que** l'électronique d'analyse (54) comprend un sous-programme logiciel pour déterminer la valeur de mesure de la charge de support maximale se rapportant au pied de support dans chaque cycle de balayage et pour la comparer à une valeur seuil définissant la stabilité.

4. Engin de travail selon l'une quelconque des revendications 1 à 3, **caractérisé en ce que** l'électronique d'analyse (54) présente un générateur de valeur seuil pour prédéfinir une force minimale.

5. Engin de travail selon l'une quelconque des revendications 1 à 4, **caractérisé en ce que** l'électronique d'analyse (54) présente un générateur de valeur seuil pour prédéfinir une force d'avertissement.

6. Engin de travail selon l'une quelconque des revendications 1 à 5, **caractérisé en ce que** l'électronique d'analyse (54) présente un générateur de valeur seuil pour prédéfinir une force maximale.

7. Engin de travail selon l'une quelconque des revendications 1 à 6, **caractérisé en ce que** l'électronique d'analyse (54) est connectée à un dispositif de commande (56) pour commander la flèche de travail (14).

8. Engin de travail selon l'une quelconque des revendications 1 à 7, **caractérisé en ce que** l'électronique d'analyse (54) est connectée à un dispositif de commande (56) pour commander une pompe à béton.

9. Engin de travail selon l'une quelconque des revendications 1 à 8, **caractérisé en ce que** l'électronique d'analyse (54) est connectée à un générateur de signaux acoustiques et/ou optiques (58).

10. Engin de travail selon l'une quelconque des revendications 1 à 9, **caractérisé en ce que les** capteurs de force (32, 34) présentent un ruban de mesure d'élongation.

11. Engin de travail selon l'une quelconque des revendications 1 à 10, **caractérisé en ce que les** capteurs de force (32, 34) sont réalisés sous forme de capteurs piézoélectriques.

12. Engin de travail selon l'une quelconque des revendications 1 à 11, **caractérisé en ce que les** circuits de mesure électriques (36, 38) contiennent un circuit de pontage dans une branche duquel est disposé le capteur de force associé (32, 34).

13. Engin de travail selon la revendication 12, **caractérisé en ce que** les circuits de mesure (36, 38) contiennent un amplificateur fonctionnel (40, 42) connecté du côté de l'entrée à des prises diagonales (50, 52) du circuit de pontage.

14. Engin de travail selon l'une quelconque des revendications 1 à 13, **caractérisé en ce que** les capteurs de force (32, 34) sont disposés dans un élément de pied (44, 46) pouvant de préférence être fixé ultérieurement au pied de support (26).

15. Engin de travail selon la revendication 14, **caractérisé en ce que** l'au moins un circuit de mesure (36, 38) est intégré dans l'élément de pied associé (44, 46).

16. Engin de travail selon la revendication 15, **caractérisé en ce que** l'au moins un circuit de mesure (36, 38) est accouplé par le biais d'une section de transfert galvanique ou sans fil à l'électronique d'analyse (54).
